# EUROPEAN PATENT SPECIFICATION

(11) **EP 2 685 830 B1**
(45) Date of publication and mention of the grant of the patent: **26.12.2018**
(21) Application number: 12719459.5
(22) Date of filing: 12.03.2012
(51) Int. Cl.: A01N 53/00, A01N 51/00, A01P 7/00, A01P 7/02, A01P 7/04

(54) **PEST CONTROL COMPOSITION AND PEST CONTROL METHOD**
SCHÄDLINGSBEKÄMPFUNGSZUSAMMENSETZUNG UND SCHÄDLINGSBEKÄMPFUNGSVERFAHREN
COMPOSITION DE LUTTE CONTRE LES INSECTES NUISIBLES ET PROCÉDÉ DE LUTTE CONTRE LES INSECTES NUISIBLES

(30) Priority: 17.03.2011 JP 2011058877; 27.12.2011 JP 2011284987
(43) Date of publication of application: 22.01.2014
(73) Proprietor: Sumitomo Chemical Company, Limited, Tokyo 104-8260 (JP)
(72) Inventor: TANAKA, Yoshito, Takarazuka-shi Hyogo. 6658555 (JP)
(74) Representative: Vossius & Partner Patentanwälte Rechtsanwälte mbB
(86) International application number: PCT/JP2012/056797
(87) International publication number: WO 2012/124796

(56) References cited:
- WO-A1-2006/021323
- WO-A2-02/30201
- WO-A2-02/30202
- WO-A2-2006/008614
- J. B. EISLEY, R. B. HAMMOND: "Corn Rootworm Larval Control in Corn, 2008", ARTHROPOD MANAGEMENT TESTS 2009, vol. 34, 2009, pages 1-2, XP008152980,
- DATABASE WPI Week 200853 Thomson Scientific, London, GB; AN 2008-J23027 XP002678281, & JP 2008 133238 A (MITSUI CHEM INC) 12 June 2008 (2008-06-12)

## Description

### Technical Field

The present invention relates to a pest control composition and a control method of pests.

### Background Art

Hitherto, various compounds are known as active ingredient of harmful arthropod control composition (See e.g., Patent Literature 1 and 2).
Moreover, WO 02/30202 A2 discloses pesticidal compositions comprising clothianidin and a pyrethrin/pyrethroid.

### Citation List

### Patent Literature

Patent Literature 1: US 5,034,404
Patent Literature 2: US 6,225,495

### Summary of the Invention.

### Problems to be Solved by the Invention

An object of the present invention is to provide a pest control composition and control method of pests having an excellent control effect on pests.

### Means for Solving the Problems

The present inventors studied intensively to find a pest control composition having an excellent control effect on pests, and as a result, found that a composition containing a combination of (E)-1-(2-chloro-1,3-thiazol-5-ylmethyl)-3-methyl-2-nitroguanidine (hereinafter refered to as the Guanidine Compound) and an ester compound represented by formula (1) 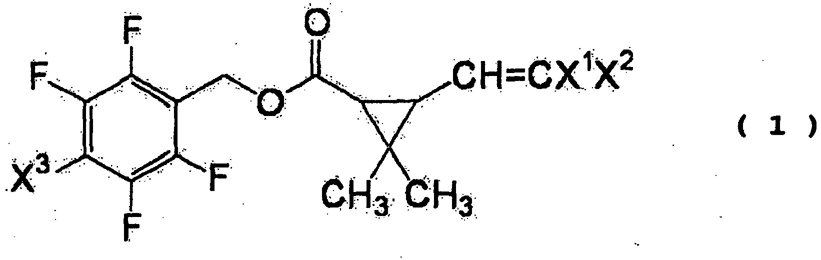 which is 2,3,5,6-tetrafluoro-4-methoxymethylbenzyl=3-(1-propenyl)-2,2-dimethylcyclopropanecarboxylate, and wherein X¹ and X² represent a methyl group and a hydrogen atom, respectively; X³ represents a methoxymethyl group
(hereinafter refered to as the Ester Compound) has an excellent pest control effect, and led to the invention.

The present invention includes:
[1] A pest control composition containing a combination of the Guanidine Compound and the Ester Compound,
   wherein the weight ratio of the Guanidine Compound to the Ester Compound is within the range of from 19 : 1 to 1 : 2.
[2] A non-therapeutic control method of pests which comprises applying an effective amount of the Guanidine Compound and the Ester Compound,
   wherein the weight ratio of the Guanidine Compound to the Ester Compound is within the range of from 19 : 1 to 1 : 2.
[3] A pest control composition as defined in [1] above for use in controlling external parasites in lifestock, dogs, cats, rats or mice.

### Effect of the Invention

Pest can be controlled by using the pest control composition of the present invention.

### Mode for Carrying Out the Invention

The pest control composition of the present invention is characterized by containing the combination of the Guanidine Compound and the Ester Compound.

In this description, halogen represents a fluorine atom, a chlorine atom, a bromine atom or an iodine atom.

The Guanidine Compound can be produced, for example, by process discribed in US 5,034,404.

A compound selling on the market in the name of clothianidin (common name) can be used for the Guanidine Compound.

The Ester Compound is 2,3,5,6-tetrafluoro-4-methoxymethylbenzyl=3-(1-propenyl)-2,2-dimethylcyclopropanecarboxylate [an ester compound represented by formula (1), wherein X¹ is a hydrogen atom, X² is a methyl group and X³ is a methoxymethyl group] (hereinafter, refered to as the ester compound B).

In the Ester Compound, there are isomers derived from two asymmetric carbon atoms at the 1-position and the 3-position on the cyclopropane ring, and isomers derived from the double bond present in the substituent at the 3-position of the cyclopropane ring. Each isomer having pest control activity or a mixture of those isomers in an arbitrary ratio which has pest control activity is included in the present invention.

The Ester Compound can be produced, for example, by process discribed in, for example, EP-0962140-A1, US 6,225,495, JP-A-2000-239232, JP-A-2000-044413, JP-A-2001-213848 and US 6,294,576. The Ester Compound also can be obtained as commercial items.

Examples of pests on which the pest control composition of the present invention has a control effect include harmful arthropod pest such as harnful insects and harmful acarines, and more specifically, the following pests:

### Lepidoptera insect pests:

Pyralidae such as *Chilo suppressalis, Cnaphalocrosis medinalis, Plodia interpunctella,* and *Ephestia kuehniella;* Noctuidae such as *Spodoptera litura, Pseudaletia separata,* and *Mamestra brassicae;* Pieridae such as *Pieris* rapae *crucivora;* Tortricidae such as *Adoxopheyes* spp.; Carposinidae; Lyonetiidae; Lymantriidae; Antographa; Agrotis spp., such as *Agrotis segetum* and *Agrotis ipsilon;* Helicoverpa spp.; Heliothis spp.; *Plutella xylostella; Parnara guttata; Tinea pellionella; Tineola bisselliella,* etc.

### Diptera insect pests:

Culex spp. such as *Culex pipiens pallens* and *Culex tritaeniorhynchus;* Aedes spp. such *as Aedes aegypti* and *Aedes albopictus;* Anopheles spp. such as *Anopheles sinensis;* Chironomidae; Muscidae such as *Musca domestica, Muscina stabulans* and *Fannia canicularis;* Calliphoridae; Sarcophagidae; Anthomyiidae such as *Delia phatura* and *Delia antiqua;* Tephritidae; Agromyzidae; Drosophilidae; Psychodidae; Phoridae; Simuliidae; Tabanidae; Stomoxyidae; Ceratopogpnnidae, etc.

### Blattaria insect pests:

*Blattella germanica, Periplaneta fuliginosa, Periplaneta americana, Periplaneta brunnea, Blatta orientalis,* etc.

### Hymenoptera insect pests:

Formicidae such as *Camponotus japonicus, Tetramorium tsushimae, Lasius niger, Pachycondyla chinensis, Monomorium intrudens, Lasius fuji, Monomorium pharaonis, Formica fusca japonica, Ochetellus glaber, Pristomyrmex punctatus, Pheidole noda,* and *Linepith ema humile*; Vespidae such as Polistes (*Polistes chinensis, Polistes riparius, Polistes jadwigae, Polistes rothneyi, Polistes nipponensis, Polistes snelleni,* and *Polistes japonicus*), *Vespa mandarinia, Vespa simillima xanthoptera, Vespa analis, Vespa crabro, Vespa ducalis, Vespula flaviceps lewisi, Vespula shidai,* and *Dolichovespula media;* Bethylidae; Tenthredinidae such as *Athalia rosae ruficornis,* etc.

### Siphonaptera insect pests:

*Ctenocephalides canis, Ctenocephalides felis, Pulex irritans,* etc.

### Anoplura insect pests:

*Pediculus humanus, Phthirus pubis, Pediculus humanus captis, Pediculus humanus corporis* etc.

### Psocoptera insect pests:

psocid

### Isoptera insect pests:

Subterranean termites such as *Reticulitermes speratus, Coptotermes formosanus, Reticulitermes flavipes, Reticulitermes hesperus, Reticulitermes virginicus, Reticulitermes tibialis, Heterotermes aureus;* drywood termites such as *Incisitermes minor*; and rottenwood termites such as *Zootermopsis nevadensis.*

### Hemiptera insect pests:

Delphacidae such as *Laodelphax striatellus, Nilaparvara lugens* and *Sogatella furcifera;* Deltocephalidae such as *Nephotettix cincticeps* and *Nephotettix virescens;* Aphididae; Pentatomidae such as *Nezara antennata, Riptortus clavatus, Eysarcoris lewisi, Eysarcoris parvus, Plautia stali, Halyomorpha mista, Stenotus rubrovittatus,* and *Trigonotylus caelestialium;* Aleyrodidae; Coccidae; Cimicidae such as *Cimex lectularius;* Tingidae; Psyllidae, etc.

### Coleoptera insect pests:

*Attagenus unicolor; Anthrenus verbasci*; corn rootworms such as *Diabrotica virgifera virgifera* and *Dabrotica undecimpunctaca howardi*; scarabaeidae such as *Anomala cuprea* and *Anomala rufocuprea;* Curculionidae such as *Sitophilus zeamais, Lissorhoptrus oryzophilus, Anthonomus grandis grandis* and *Callosobruchus cheninsis;* Tenebrionidae such as *Tenebrio molitor* and *Tribolium castaneum;* Chrysomelidae such as *Oulema oryzae, Phyllotreta striolata* and *Aulacophora femoralis;* Anobiidae; Epilachna spp. such as *Henosepilachna vigintioctopunctata;* Lyctidae; Bostrychidae; Ptinidae; Cerambycidae; *Paederus fuscipes;* etc.

### Thysanoptera insect pests:

*Thrips palmi, Frankliniella occidentalis, Thrips hawaiiensis,* etc.

### Orthoptera insect pests:

Gryllotalpidae, Acrididae, Gryllidae, etc.

### Acarina:

Pyroglyphidae such as *Dermatophagoides farinae* and *Dermatophagoides pteronyssinus*; Arcaridae such as *Tyrophagus putrescentiae* and *Aleuroglyphus oyatus;* Glycyphagidae such as *Glycyphagus privatus, Glycyphagus domesticus* and *Glycyphagus destructor;* Cheyletidae such as *Cheyletus malaccensis* and *Cheyletus malaccesis;* Tarsonemidae; Chortoglyohidae; Oribatei; Tetranychidae such as *Tetranychus urticae, Tetranychus kanzawai, Panonychus citri* and *Panonychus ulmi*; Erythraeidae; Ixodidae such as *Haemaphysalis longicornis;* Dermanyssidae such as *Ornithonyssus sylvairum* and *Dermanussus galinae*; etc.

Scutigeromorpha, Chilopoda such as *Scolopendra subsipnipes mutilans*; Diplopoda such as *Oxidus gracilis* and *Nedyopus tambanus;* Armadilldiiidae and Porcellionidae such as *Armadillidium vulgare;* Gastropoda such as *Limax marginatus* and *Limax flavus;* and Araneae such as *Nephila clavata, Cheiracanthium japonicum* and *Latrodectus hasselti*; etc.

In the pest control composition of the present invention, the weight ratio of the Guanidine Compound to the Ester Compound is within the range of from
19 : 1 to 1 : 2, preferably from 18 : 1 to 1 : 1.

The pest control composition of the present invention can be a simple mixture of the Guanidine Compound and the Ester Compound. However, it is usually used in the form of various formulations. Examples of the formulations include oil solution, emulsifiable concentrate, wettable powder, wettable dispersible granule, suspension concentrate (e.g. suspension in water, and emulsion in water), microcapsule formulation, gel formulation, dust, granule, tablet, coating formulation, aerosol, carbon dioxide formulation, heating vaporization formulation (e.g. mosquito coil, electric mosquito mat, and fluid absorption wicking-type pesticide), piezo-type spray insecticide, heating fumigant (e.g. self-burning fumigant, chemical reaction type fumigant, and porous ceramic plate fumigant), non-heating fumigant (e.g. resin fumigant, paper fumigant, unwoven fabric fumigant, woven fabric fumigant, and sublimation tablet), smoking formulation (e.g. fogging), direct contact formulation (e.g. sheet type contact formulation, tape type contact formulation, and net type contact formulation), ULV formulation, and poison bait.

The formulation can be prepared, for example, by the following methods.
(1) The Guanidine Compound and the Ester Compound are mixed with a solid carrier, a liquid carrier, a gaseous carrier or feed and, if necessary, other auxiliary agents for formulations such as a surfactant.
(2) A base material is impregnated with the Guanidine Compound and the Ester Compound.
(3) The Guanidine Compound, the Ester Compound and a base material are mixed, followed by molding.

These formulations usually contain as a total amount 0.001 to 90% by weight of the Guanidine Compound and the Ester Compound.

Examples of the solid carrier used for the formulation include fine powders and granules such as clays (e.g. kaolin clay, diatomaceous earth, bentonite, Fubasami clay, and acidic white clay), synthetic hydrated silicon oxide, talc, ceramics, other inorganic minerals (e.g. sericite, quarts, sulfur, active carbon, calcium carbonate, and hydrated silica), and chemical fertilizers (e.g. ammonium sulfate, ammonium phosphate, ammonium nitrate, ammonium chloride, and urea); and solid materials at ordinary temperature (e.g. 2,4,6-triisopropyl-1,3,5-trioxane, naphthalene, p-dichlorobenzene, camphor, and adamantane) as well as felt, fibers, cloth, woven fabrics, sheets, paper, threads, foam, porous materials and multifilaments composed of one or more of wool, silk, cotton, hemp, pulp, synthetic resins (e.g. polyethylene resins such as low-density polyethylene, linear low-density polyethylene, and high-density polyethylene; ethylene-vinyl ester copolymers such as ethylene-vinyl acetate copolymer; ethylene-methacrylate copolymers such as ethylene-methyl methacrylate copolymer, and ethylene-ethyl methacrylate copolymer; ethylene-acrylate copolymers such as ethylene-methyl acrylate copolymer, and ethylene-ethyl acrylate copolymer; ethylene-vinyl carboxyic acid copolymers such as ethylene-acrylic acid copolymer; ethylene-tetracyclododecene copolymer; polypropylene resins such as propylene homopolymer, and propylene-ethylene copolymer; poly-4-methylpentene-1; polybutene-1; polybutadiene; polystyrene; acrylonitrile-styrene resin; styrene elastomers such as acrylonitrile-butadiene-styrene resin, styrene-conjugated diene block copolymer, and hydrogenated styrene-conjugated diene block copolymer; fluorine plastics; acrylic resins such as polymethyl methacrylate; polyamide resins such as nylon 6, and nylon 66; polyester resins such as polyethylene terephthalate, polyethylene naphthalate, polybutylene terephthalate, and polycyclohexylene dimethyleneterephthalate; polycarbonate; polyacetal; polyacrylsulfone; polyarylate; polyhydroxybenzoate; polyetherimide; polyestercarbonate; polyphenylene ether resin; polyvinyl chloride; polyvinylidene chloride; polyurethane; and porous resins such as foamed polyurethane, foamed polypropylene, and foamed polyethylene), glass, metals, and ceramics.

Examples of the liquid carrier include aromatic or aliphatic hydrocarbons (e.g. xylene, toluene, alkyl naphthalene, phenylxylylethane, kerosene, light oil, hexane, and cyclohexane), halogenated hydrocarbons (e.g. chlorobenzene, dichloromethane, dichloroethane, and trichloroethane), alcohols (e.g. methanol, ethanol, isopropyl alcohol, butanol, hexanol, benzyl alcohol, and ethylene glycol), ethers (e.g. diethylether, ethylene glycol dimethyl ether, diethylene glycol monomethyl ether, diethylene glycol monoethyl ether, propylene glycol monomethyl ether, tetrahydrofuran, and dioxane), esters (e.g. ethyl acetate, and butyl acetate), ketones (e.g. acetone, methyl ethyl ketone, methyl isobutyl ketone, and cyclohexanone), nitriles (e.g. acetonitrile, and isobutyronitrile), sulfoxides (e.g. dimethyl sulfoxide), acid amides (e.g. N,N-dimethylformamide, N,N-dimethylacetoamide, and N-methyl-pyrrolidone), alkylidene carbonates (e.g. propylene carbonate), vegetable oils (e.g. soybean oil, and cotton oil), vegetable essential oil (e.g. orange oil, hyssop oil, and lemon oil) and water.

Examples of the gaseous carrier include butane gas, chlorofluorocarbon gas, liquefied petroleum gas (LPG), dimethyl ether, and carbon dioxide.

Examples of the surfactant include alkyl sulfate ester salts, alkyl sulfonates, alkylaryl sulfonates, alkylaryl ethers, polyoxyethylenated alkylaryl ethers, polyethylene glycol ethers, polyhydric alcohol esters, and sugar alcohol derivatives.

Examples of other auxiliary agents for formulations include binders, dispersants, and stabilizers. Specific examples thereof include casein, gelatin, polysaccharides (e.g. starch, gum arabic, cellulose derivatives, and arginic acid), lignin derivatives, bentonite, saccharides, synthetic water-soluble polymers (e.g. polyvinyl alcohol, and polyvinyl pyrrolidone), polyacrylic acid, BHT (2,6-dit-butyl-4-methylphenol), and BHA (mixture of 2-t-butyl-4-methoxyphenol and 3-t-butyl-4-methoxyphenol).

Examples of the base material of a mosquito coil include a mixture of plant powder (e.g. wood powder, and pyrethrum) and a binder (e.g. powder of *Machilus thunbergii,* starch, and gluten).

Examples of the base material of an electric mosquito mat include cotton linter matted, condensed and pressed in a plate shape, and mixed fibrils of cotton linter and pulp matted, condensed and pressed in a plate shape.

Examples of the base material of a self-burning fumigant include combustion heat-developing agents such as nitrates, nitrites, guanidine salts, potassium chlorate, nitrocellulose, ethyl cellulose, and wood powder; heat decomposition stimulating agents such as alkali metal salts, alkaline earth metal salts, bichromates, and chromates; oxygen suppliers such as potassium nitrate; combustion supporting agents such as melamine, and wheat starch; fillers such as diatomaceous earth; and binders such as synthetic adhesives.

Examples of the base material of a chemical reaction type fumigant include heat-developing agents such as sulfide, polysulfide, and hydrosulfide of alkali metals, and calcium oxide; catalysts such as carbonaceous materials, iron carbide, and activated clay; organic foaming agents such as azodicarbonamide, benzenesulfonyl hydrazide, dinitro pentamethylene tetramine, polystyrene and polyurethane; and fillers such as natural fibers and synthetic fibers.

Examples of the resin used for, for example, a resin fumigant include polyethylene resins such as low-density polyethylene, linear low-density polyethylene, and high-density polyethylene; ethylene-vinyl ester copolymers such as ethylene-vinyl acetate copolymer; ethylene-methacrylate copolymers such as ethylene-methyl methacrylate copolymer, and ethylene-ethyl methacrylate copolymer; ethylene-acrylate copolymers such as ethylene-methyl acrylate copolymer, and ethylene-ethyl acrylate copolymer; ethylene-vinyl carboxylate copolymers such as ethylene-acrylic acid copolymer; ethylene-tetracyclododecene copolymer; polypropylene resins such as propylene homopolymer, and propylene-ethylene copolymer; poly-4-methylpentene-1; polybutene-1; polybutadiene; polystyrene; acrylonitrile-styrene resin; styrene elastomers such as acrylonitrile-butadiene-styrene resin, styrene-conjugated diene block copolymer, and hydrogenated styrene-conjugated diene block copolymer; fluorine plastics; acrylic resins such as polymethyl methacrylate; polyamide resins such as nylon 6, and nylon 66; polyester resins such as polyethylene terephthalate, polyethylene naphthalate, polybutylene terephthalate, and polycyclohexylene dimethyleneterephthalate; polycarbonate; polyacetal; polyacrylsulfone; polyarylate; polyhydroxybenzoate; polyetherimide; polyestercarbonate; polyphenylene ether resin; polyvinyl chloride; polyvinylidene chloride; and polyurethane. They can be used alone or in a combination thereof. Further, if necessary, plasticizer such as phthalates (e.g. dimethyl phthalate, and dioctyl phthalate), adipates, and stearic acid can be added to these base materials. The resin fumigant is prepared by kneading the Guanidine Compound and the Ester Compound into the base material, followed by molding it by injection molding, extrusion molding or press molding. The resultant resin formulation can undergo further processes such as molding and cutting, if necessary, processing into a form of plate, film, tape, net or string. These resin formulations can be processed into, for example, collars for animals, ear tags for animals, sheet formulations, guide strings and horticultural supports.

Examples of the base material for poison bait include feed ingredients such as grain powder, vegetable oil, sugars, and crystalline cellulose; antioxidants such as dibutylhydroxy toluene, and nordihydroguaiaretic acid; preservatives such as dehydroacetic acid; accidental ingestion prevention agents by children and pets such as chili pepper; and pest attractive flavors such as cheese flavor, onion flavor, and peanut oil.

The control method of pest of the present invention is carried out by applying the pest control composition of the present invention to pests and/or to areas where pests live. And the control method of pest of the present invention is also carried out by applying the Guanidine Compound and the Ester Compound to pests and/or to areas where pests live respectively.

Specifically, as the application method of the pest control composition of the present invention, the following methods can be exemplified, and these methods can be appropriately selected according to, for example, the form of the pest control composition of the present invention, and the application place.
(1) The pest control composition of the present invention is applied as it is to pests and/or areas where pests live.
(2) The pest control composition of the present invention is diluted with a solvent such as water, followed by applying to pests and/or areas where pests live.

In this case, usually, the pest control composition of the present invention in the form of, for example, emulsifiable concentrate, wettable powder, suspension concentrate or microcapsule preparation is diluted so that the total concentration of the Guanidine Compound and the Ester Compound becomes 0.1 to 50000 ppm.
(3) The pest control composition of the present invention is heated at areas where pests live to vaporize the effective ingredients.

In this case, the applied rate and concentration of the Guanidine Compound and the Ester Compound can be appropriately determined according to, for example, the form of the pest control composition of the present invention, the application period, the application place, the application method, and the conditions of damage.

In utilizing the pest control composition of the present invention for preventative purpose, the application rate is usually from 0.0001 to 1000 mg/m³ in terms of the total amount of the Guanidine Compound and the Ester Compound when applied to space, while it is from 0.0001 to 1000 mg/m² when applied to plane. The heating vaporization formulation such as mosquito coil and electric mosquito mat is applied by appropriately heating according to the form of the formulation to vaporize the effective ingredients. The non-heating fumigant such as resin fumigant, paper fumigant, sublimation tablet, unwoven fabric fumigant, woven fabric fumigant, and sheet fumigant can be used, for example, by leaving the formulation as it is at the place to be applied, or by making a wind toward the formulation.

Examples of the place wherein the pest control composition of the present invention is applied for preventative purpose include closet, dresser, chest, wardrobe, cupboard, toilet, bathroom, storeroom, living room, dining room, warehouse, and inside a car. Further, the pest control composition of the present invention can also be applied to outside open space.

When the pest control composition of the present invention is used to livestock such as cows, horses, pigs, sheep, goats and chickens, and small animals such as dogs, cats, rats and mice, for the purpose of controlling external parasites, veterinary known methods are applied to the animals. Specifically, the formulation is administered by way of a tablet, mixing in feed, a suppository and injection (including intramuscular, subcutaneous, intravenous and intraperitoneal injections), when systemic control is intended. On the other hand, the formulation is used by way of spraying an oil solution or aqueous solution, pour-on or spot-on treatment, washing an animal with a shampoo formulation, or putting a collar or ear tag made of a resin formulation to an animal, when non-systemic control is intended. The total dosage of the Guanidine Compound and the Ester Compound is usually in the range from 0.01 to 1000 mg per 1 kg of an animal body.

### Examples

Hereinafter, the present invention will be described in more detail by way of Formulation Examples and Test Examples, but the present invention is not limited to only these Examples.

First, Formulation Examples of the pest control composition of the present invention will be described. In the Formulation Examples, all the "parts" are by weight unless otherwise stated.

### Formulation Example 1

In 37.5 parts of xylene and 37.5 parts of N,N-dimethylformamide, 0.9 part of the Guanidine Compound and 9 parts of the Ester Compound B
are dissolved. To the resultant solution, 9.1 parts of polyoxyethylene styryl phenyl ether and 6 parts of dodecylbenzenesulfonic acid calcium salt are added, followed by thoroughly mixing to obtain an emulsifiable concentrate.

### Formulation Example 2

To 20 parts of the Guanidine Compound and 20 parts of the Ester Compound B,
5 parts of SORPOL 5060 (registered trademark of TOHO Chemical Industry Co., Ltd.) is added, followed by thoroughly mixing. To the resultant mixture, 32 parts of CARPLEX #80 (registered trademark of Shionogi & Co., Ltd., dust of synthetic hydrated silicon oxide) and 23 parts of 300 mesh diatomaceous earth are added, followed by mixing with a juice mixer to obtain a wettable powder.

### Formulation Example 3

To 3 parts of the Guanidine Compound and 0.3 part of the Ester Compound B,
5 parts of dust of synthetic hydrated silicon oxide, 5 parts of dodecylbenzenesulfonic acid sodium salt, 30 parts of bentonite and 56.7 parts of clay are added, followed by thoroughly stirring and mixing. Then, an appropriate amount of water is added to the resultant mixture. The mixture is further stirred, granulated with a granulator, and air-dried to obtain a granular formulation.

### Formulation Example 4

In a mortar, 4.5 parts of the Guanidine Compound, 0.5 part of the Ester Compound B,
1 parts of dust of synthetic hydrated silicon oxide, 1 part of DORILES B (trade name, manufacture by Daiichi Sankyo Co., Ltd.) as a flocculating agent and 7 parts of clay are thoroughly mixed, followed by stirring and mixing with a juice mixer. To the resultant mixture, 86 parts of cut clay is added, followed by thoroughly stirring and mixing to obtain a dust formulation.

### Formulation Example 5

A mixture of 8 parts of the Guanidine Compound, 3 parts of the Ester Compound B,
35 parts of white carbon containing a half amount of polyoxyethylene alkyl ether sulfate ammonium salt, and 54 parts of water are finely ground by a wet grinding method to obtain a formulation.

### Formulation Example 6

In 10 parts of dichloromethane, 0.05 part of the Guanidine Compound and 0.1 part of the Ester Compound B
are dissolved, and the resultant solution is mixed with 89.85 parts of an isoparaffin solvent (ISOPAR M, registered trademark of Exxon Chemical Co., Ltd.) to obtain an oil solution.

### Formulation Example 7

Into an aerosol can, 0.1 part of the Guanidine Compound, 0.05 part of the Ester Compound B,
and 49.85 parts of Neothiozole (Chuo Kasei Co., Ltd.) are placed. After mounting an aerosol valve, 25 parts of dimethylether and 25 parts of LPG are filled, followed by shaking and further mounting an actuator to obtain an oily aerosol.

### Formulation Example 8

A mixture of 0.5 part of the Guanidine Compound, 0.05 part of the Ester Compound B,
0.01 part of BHT, 5 parts of xylene, 3.44 parts of deodorized kerosine and 1 part of an emulsifier (Atomos 300, registered trademark of Atomos Chemical Co., Ltd.), and 50 parts of distilled water are filled into an aerosol container, and a valve part is attached. Then, 40 parts of a propellant (LPG) is filled thereinto through the valve under pressure to obtain an aqueous aerosol.

### Formulation Example 9

A solution prepared by dissolving 60 mg of the Guanidine Compound and 40 mg of the Ester Compound B
in an appropriate amount of acetone is impregnated with a porous ceramic plate (4.0cm×4.0cm, 1.2cm in thickness) to give a heating fumigant.

The following Test Examples show that the pest control composition of the present invention has excellent controlling effect on pests.

In the Test Examples, 2,3,5,6-tetrafluoro-4-methoxymethylbenzyl=(1R)-trans-3-(1-propenyl(Z))-2,2-dimethylcyclopropanecarboxylate is used for the ester compound B.

### Test Example 1

Test liquid composition containing the Guanidine Compound and the Ester Compound at specified concentration is prepared. Ten adults of German cockroach (Blattella germanica) (5 male and 5 female adults) are released in a test container (diameter: 8.75 cm, height: 7.5 cm, bottom: 16 mesh wire netted) of which inner wall is smeared with butter. The container is placed on the bottom of a test chamber (bottom: 46 cm x 46 cm, height: 70 cm). The liquid composition (0.7 ml) is sprayed from a height of 60 cm above the upper side of the container using a spray gun (spraying pressure: 0.9 kg/cm²). Thirty seconds after spraying, the container is taken out from the test chamber. At a given period of time after spraying, the number of knocked down insects is counted and a knock down rate is calculated.

As a result, it can be confirmed that the pest control composition of the present invention has excellent controlling effect on pests.

### Test Example 2

Acetone-diluted solutions were prepared so that predetermined dosage of the Guanidine Compound and the ester compound B on glass plates indicated in Table 1 would be applied. The acetone-diluted solutions (0.5 ml) were treated on the underside of glass petri dishes with a diameter of 7 cm uniformly and air-dried. Ten female adults of common mosquito (Culex pipiens pallens) were collected by means of a pocket aspirator and placed into the petri dish, then contacted compulsorily with the treated underside of glass petri dishes by covering with a lucid plate made of polyvinyl chloride.

Three minutes after covering, said common mosquitoes were released in nylon cage (size: 16.5 cm x 15.5 cm x 22 cm). At a given period of time after releasing, the number of knocked down insects was counted and a knock down rate was calculated.

Knock down rate after 5 minutes are shown in Table 1.

**Table 1**

| Entry | Ratio of the Guanidine Compound to the ester compound B by weight | Dosage of the Guanidine Compound (mg/plate) | Dosage of the ester compound B (mg/plate) | Knock down rate (%) after 5 minutes |
|---|---|---|---|---|
| 1 | 1 : 1 | 0.000125 | 0.000125 | 80 |
| 2 | 1 : 1 | 0.00025 | 0.00025 | 90 |
| 3 | 1 : 1 | 0.0005 | 0.0005 | 100 |
| 4 | 10 : 1 | 0.00125 | 0.000125 | 60 |
| 5 | 12 : 1 | 0.0015 | 0.000125 | 60 |
| 6 | 14 : 1 | 0.00175 | 0.000125 | 60 |
| 7 | 16 : 1 | 0.002 | 0.000125 | 70 |
| 8 | 18 : 1 | 0.00225 | 0.000125 | 90 |
| 9 | 20 : 1 | 0.0025 | 0.000125 | 40 |
| 10 | 1 : 10 | 0.0000125 | 0.000125 | 30 |
| reference 1 | - | 0.000125 | - | 10 |
| reference 2 | - | 0.00025 | - | 10 |
| reference 3 | - | 0.0005 | - | 10 |
| reference 4 | - | - | 0.000125 | 10 |
| reference 5 | - | - | 0.00025 | 20 |
| reference 6 | - | 0.00125 | - | 20 |

### Industrial Applicability

Because the pest control composition of the present invention has an excellent pest control effect, this invention is useful.

## Claims

1. A pest control composition containing a combination of (E)-1-(2-chloro-1,3-thiazol-5-ylmethyl)-3-methyl-2-nitroguanidine and an ester compound which is 2,3,5,6-tetrafluoro-4-methoxymethylbenzyl⁻³⁻ (1-propenyl)-2,2-dimethylcyclopropanecarboxylate, wherein the weight ratio of (E)-1-(2-chloro-l,3-thiazol-5-ylmethyl)-3-methyl-2-nitroguanidine to the ester compound is within the range of from 19 : 1 to 1 : 2.

2. A non-therapeutic control method of pests which comprises applying an effective amount of (E)-1-(2-chloro-1,3-thiazol-5-ylmethyl)-3-methyl-2-nitroguanidine and an ester compound which is 2,3,5,6-tetrafluoro-4-methoxymethylbenzyl⁻³⁻ (1-propenyl)-2,2-dimethylcyclopropanecarboxylate
at a weight ratio of (E)-1-(2-chloro-1,3-thiazol-5-ylmethyl)-3-methyl-2-nitroguanidine to the ester compound within the range of from 19 : 1 to 1 : 2 to the pest or to an area where the pest lives.

3. A pest control composition containing a combination of (E)-1-(2-chloro-1,3-thiazol-5-ylmethyl)-3-methyl-2-nitroguanidine and an ester compound which is 2,3,5,6-tetrafluoro-4-methoxymethylbenzyl⁻³⁻ (1-propenyl)-2,2-dimethylcyclopropanecarboxylate at a weight ratio of (E)-1-(2-chloro-1,3-thiazol-5-ylmethyl)-3-methyl-2-nitroguanidine to the ester compound within the range of from 19 : 1 to 1 : 2 for use in controlling external parasites in livestock, dogs, cats, rats or mice.

## Patentansprüche

1. Eine Schädlingsbekämpfungszusammensetzung enthaltend eine Kombination von (E)-1-(2-Chlor-1,3-thiazol-5-ylmethyl)-3-methyl-2-nitroguanidin und einer Esterverbindung, bei der es sich um 2,3,5,6-Tetrafluor-4-methoxymethylbenzyl-3-(1-propenyl)-2,2-dimethylcyclopropancarboxylat handelt, wobei das Massenverhältnis von (E)-1-(2-Chlor-1,3-thiazol-5-ylmethyl)-3-methyl-2-nitroguanidin zu der Esterverbindung innerhalb des Bereichs von 19:1 bis 1:2 liegt.

2. Ein nicht-therapeutisches Bekämpfungsverfahren von Schädlingen, welches Auftragen einer wirksamen Menge von (E)-1-(2-Chlor-1,3-thiazol-5-ylmethyl)-3-methyl-2-nitroguanidin und einer Esterverbindung, bei der es sich um 2,3,5,6-Tetrafluor-4-methoxymethylbenzyl-3-(1-propenyl)-2,2-dimethylcyclopropancarboxylat handelt, in einem Massenverhältnis von (E)-1-(2-Chlor-1,3-thiazol-5-ylmethyl)-3-methyl-2-nitroguanidin zu der Esterverbindung innerhalb des Bereichs von 19:1 bis 1:2, auf die Schädlinge oder einen Bereich wo die Schädlinge leben, umfasst.

3. Eine Schädlingsbekämpfungszusammensetzung enthaltend eine Kombination von (E)-1-(2-Chlor-1,3-thiazol-5-ylmethyl)-3-methyl-2-nitroguanidin und einer Esterverbindung, bei der es sich um 2,3,5,6-Tetrafluor-4-methoxymethylbenzyl-3-(1-propenyl)-2,2-dimethylcyclopropancarboxylat handelt, in einem Massenverhältnis von (E)-1-(2-Chlor-1,3-thiazol-5-ylmethyl)-3-methyl-2-nitroguanidin zu der Esterverbindung innerhalb des Bereichs von 19:1 bis 1:2 zur Verwendung bei der Bekämpfung von Ektoparasiten in Viehbeständen, Hunden, Katzen, Ratten oder Mäusen.

## Revendications

1. Composition de contrôle de parasite contenant une combinaison de (E)-1-(2-chloro-1,3-thiazol-5-ylméthyl)-3-méthyl-2-nitroguanidine et d'un composé d'ester qui est le 2,3,5,6-tétrafluoro-4-méthoxyméthylbenzyl-3-(1-propényl)-2,2-diméthylcyclopropane-carboxylate, dans laquelle le rapport massique de (E)-1-(2-chloro-1,3-thiazol-5-ylméthyl)-3-méthyl-2-nitroguanidine au composé d'ester se trouve dans l'intervalle de 19:1 à 1:2.

2. Procédé de contrôle non-thérapeutique de parasite qui comprend l'application d'une quantité efficace de (E)-1-(2-chloro-1,3-thiazol-5-ylméthyl)-3-méthyl-2-nitroguanidine et d'un composé d'ester qui est le 2,3,5,6-tétrafluoro-4-méthoxyméthylbenzyl-3-(1-propényl)-2,2-diméthylcyclopropanecarboxylate à un rapport massique de (E)-1-(2-chloro-1,3-thiazol-5-ylméthyl)-3-méthyl-2-nitroguanidine au composé d'ester dans l'intervalle de 19:1 à 1:2 au parasite ou à une surface où vit le parasite.

3. Composition de contrôle de parasite contenant une combinaison de (E)-1-(2-chloro-1,3-thiazol-5-ylméthyl)-3-méthyl-2-nitroguanidine et d'un composé d'ester qui est le 2,3,5,6-tétrafluoro-4-méthoxyméthylbenzyl-3-(1-propényl)-2,2-diméthylcyclopropane-carboxylate à un rapport massique de (E)-1-(2-chloro-1,3-thiazol-5-ylméthyl)-3-méthyl-2-nitroguanidine au composé d'ester dans l'intervalle de 19:1 à 1:2 pour une utilisation dans le contrôle de parasites externes du bétail, des chiens, chats, rats ou souris.
